(19)

Europäisches
Patentamt
European
Patent Office
Office européen
des brevets

(11) **EP 2 193 840 A1**

(12) **EUROPEAN PATENT APPLICATION**

(43) Date of publication:
**09.06.2010 Bulletin 2010/23**

(51) Int Cl.:
**B01J 23/00** (2006.01)

(21) Application number: **10154088.8**

(22) Date of filing: **30.05.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **01.06.2007 US 941415 P**

(62) Document number(s) of the earlier application(s) in
accordance with Art. 76 EPC:
**08769856.9 / 2 162 209**

(71) Applicant: **Invista Technologies S.à.r.l.
8001 Zurich (CH)**

(72) Inventors:
• **Slaten, Colin S.
Orange, TX 77632 (US)**
• **Aki, Sudhir
Houston, TX 77056 (US)**

(74) Representative: **Cockerton, Bruce Roger et al
Carpmaels & Ransford
43-45 Bloomsbury Square
London
WC1A 2RA (GB)**

Remarks:
This application was filed on 19-02-2010 as a
divisional application to the application mentioned
under INID code 62.

(54) **Catalyst and process for the conversion of nitrous oxide**

(57) A catalyst composition and a process for using it to decompose nitrous oxide into nitrogen and oxygen are disclosed. The catalyst composition has surface area of about 1 to about 200m$^2$/g after exposure to a calcination temperature of between about 400°C and about 900°C, or about 1 to about 100 m2/g after exposure to a calcination temperature of between about 400°C and about 950°C.

EP 2 193 840 A1

**Description**

## CROSS-REFERENCE TO RELATED APPLICATIONS

This application claims the benefit of the filing date of U.S. provisional application No. 60/941,415, filed on June 1, 2007, the entire contents of which are incorporated herein by reference.

## FIELD OF THE INVENTION

The invention is directed to a catalyst and a process of using the catalyst for conversion of nitrous oxide ($N_2O$) to nitrogen and oxygen.

## BACKGROUND

Nitrous oxide is believed to be the main stratospheric source of nitrogen oxide and to be implicated in the destruction of the ozone layer. It has also been identified by some in the industry as a contributor to the greenhouse effect.

Nitrous oxide is generated in industrial chemical processes. It is also known that nitrous oxide can be decomposed in the presence of certain pure or supported transition metal oxide catalysts into nitrogen and oxygen.

A number of catalysts and processes for the decomposition of nitrous oxide into nitrogen and oxygen have been proposed in the past. For example, Anseth et al., U.S. Patent 5,314,673 disclose a process of converting nitrous oxide to nitrogen and oxygen by treating the nitrous oxide gas with a catalyst of cobalt oxide and nickel oxide on a zirconia (also referred to as zirconium oxide, $ZrO_2$) support at a temperature of at least 280°C. It is believed the catalyst has initial surface area of about 20 $m^2/g$ and it has been demonstrated that it shows a loss of surface area and activity over time.

It is known that zirconium oxide exists in monoclinic, tetragonal and cubic structures. Monoclinic phase is stable up to 1100°C; the transition from monoclinic to tetragonal phase occurs at about 1200°C and transition to cubic phase from tetragonal phase occurs at about 2700°C (Stevens R., Zirconia and Zirconia Ceramics, Magnesium Electron Ltd., (1996) and Chuah and Jaenicke, Applied Catalysis A: General 163 (1997) 261-273). Furthermore, zirconium oxide exhibits large hysteresis during these phase transitions. For example, on cooling the transition from tetragonal phase to monoclinic phase occurs between 1000°C and 850°C. Thermal instability of zirconium oxide-based catalysts has been attributed to these phase transitions.

Zirconium oxide, which may be present in meta-stable tetragonal phase at low temperatures, can be synthesized in several ways. For example, it can be synthesized by doping zirconia with cations or anions, or by altering the precipitation techniques used in the synthesis of monoclinic zirconium oxide. These methods have been known for some time and have been studied extensively. For example, the doping and alteration of precipitation techniques are discussed in Chuah and Jaenicke, Applied Catalysis A: General 163 (1997) 261-273 and publications therein, and Chuah and Jaenicke, Applied Catalysis A: General 145 (1996) 267-284), both incorporated herein by reference, and the doping is additionally discussed in Stevens R., Zirconia and Zirconia Ceramics, Magnesium Elektron Ltd. (1996).

Mercera et al., Applied Catalysis, 71, 1991, 363-391 ("Mercera I"), incorporated herein by reference, report that thermal stability of monoclinic zirconia (prepared using gel precipitation technique) was significantly improved by the addition (by an impregnation technique) of several oxides, CaO, $Y_2O_3$, $La_2O_3$, MgO.

Mercera et al., Applied Catalysts, 78, 1991, 79-96, ("Mercera II"), incorporated herein by reference, disclose the preparation of single-phase tetragonal zirconium oxides by the incorporation of yttrium and lanthanum in zirconium oxide to form solid solutions.

Typical dopants used to stabilize either tetragonal or cubic phase zirconium oxide include MgO, CaO, $La_2O_3$, NiO or $Al_2O_3$ *See*, Chuah and Jaenicke, Applied Catalysis A: General 163 (1997) 261-273, and Chuah and Jaenicke, Applied Catalysis A: General 145 (1996) 267-284) and the following publications cited therein: B. Fegley Jr. P. White, H.K. Bowen, Am. Ceram. Soc. Bull. 64 (1985) 1115; P.D.L. Mercera, J.G. Van Ommen, E.B.M. Doesburg, A.J. Burggraaf, J.R.H. Ross, Appl. Catal. 71 (1992) 363; P.D.L. Mercera, J.G. Van Ommen, E.B.M. Doesburg, A.J. Burggraaf, J.R.H. Ross, Appl. Catal. 78 (1991) 79; J.C. Duchet, M.J. Tilliette, D. Cornet, Catal. Today 10 (1991) 507; R. Franklin, P. Goulding, J. Haviland, R.W. Joyner, I. McAlpine, P. Moles, C. Norman, T. Nowell, Catal. Today 10 (1991) 405; p. 3B.

Alini et al., EP 1 504 805 A1, proposes to use $CeO_2/ZrO_2$-supported catalysts for $N_2O$ destruction. The catalysts contain oxides or mixed oxides selected from Cu, Mn, Fe, La and Y, supported on $CeO_2/ZrO_2$ supports.

Recently, several research groups have shown that one can obtain high surface area zirconium oxide without adding any dopants but by altering the precipitation conditions, for example, by digesting the zirconium hydroxide in either ammonium hydroxide, potassium hydroxide or sodium hydroxide under reflux at temperatures ranging from 30 °C to 100°C. (*See* Chuah and Jaenicke, Applied Catalysis A: General 163 (1997) 261-273 and publications therein, and Chuah and Jaenicke, Applied Catalysis A: General 145 (1996) 267-284, both incorporated herein by reference.)

French patent document, FR 2590887, is directed to zirconium oxide having a specific surface area stabilized at high temperature. The composition contains zirconium oxide and an additive constituted by at least one of the oxides of the elements chosen from the group consisting of silicon, the rare-earth metals and aluminum. Another embodiment is directed to a composition containing zirconium oxide and an additive constituted by at least one of the oxides of the elements chosen from the group constituted by yttrium and cerium. The composition may be prepared by several different methods, including precipitation, by the addition of a basic compound, e.g., aqueous ammonia, to a solution of an acid precursor of the zirconium oxide, such as a zirconium nitrate, chloride or sulfate. Other described methods include calcining, such as direct calcining of the precursor in a flame, and production starting from a sol, in particular the preparation involving passing a solution of the precursor via a sol obtained by hot hydrolysis. This patent document is incorporated herein by reference.

Moles et al., Development of High Surface Area Zirconia Supports For Environmental Catalysts, Science and Technology in Catalysis. 1994. (available from http://www.zrchem.com/pdf/CATGEN3.pdf) describes the increase in the surface area of zirconia by the addition of dopants, i.e., $SiO_2$, CaO, $La_2O_3$ or $Al_2O_3$, or sulfate. The $SiO_2$-doped zirconia is identified as XZO 645/01 (Fig. 5), and it is available from MEL Chemicals, Manchester, England. This publication is incorporated by reference herein.

Guerrero et al. (Applied Catalysis A: General, 298, 2006, 243-253) reported that the activity of Pd supported on zirconium oxide can be significantly increased by using high surface area support.

Franklin et al., Catalysis Today, 10, 1991, 405, report that doping zirconia with silica and lanthana dopants significantly stabilized surface area of zirconia.

Duchet et al., Catalysis Today, 10, 1991, 507-520, report that zirconia samples doped with yttrium, nickel or aluminum, calcined at 770-970°K had improved surface area and thermal stability.

Vernooy, WO 00/51715, discusses a process for conversion of nitrous oxide to nitrogen and oxygen comprising contacting $N_2O$ with a supported catalyst comprising iron and, optionally, at least one of cobalt, nickel, rhodium, palladium, iridium, platinum, manganese, lanthanum and cerium. The catalyst is prepared by: (a) preparing a paste including contacting zirconium hydroxide with a solution of an iron salt and a zirconium salt, optionally in the presence of binders and lubricants; (b) forming a shaped article from the step (a) paste; (c) drying the step (b) shaped article; (d) calcining the shaped article at a temperature of at least 400 °C; (e) optionally adding at least one of cobalt; nickel, rhodium, palladium, iridium, platinum, manganese, lanthanum or cerium to step (a) or to the calcined step (d) shaped article.

## SUMMARY OF THE INVENTION

In one embodiment, a catalyst composition comprises a zirconium oxide (also known as "zirconia") substrate, which includes one or more oxides of at least one of the following: Ca, Sr, Y, La, Ce, Pr, Nd, Sm, Eu, Gd, Tb, Dy, W, Ti, Al, Si, Ge, and Sn, such as La, Ce, Nd, Sm, Eu, Ti, Al and Si, for example oxides of La, Ce, Nd or W, as a dopant or dopants. The catalyst composition further comprises nickel oxide, cobalt oxide or a combination thereof as catalytically active metals deposited upon the surface of the substrate.

Another embodiment is directed to a process for converting $N_2O$ to nitrogen and oxygen comprising contacting the $N_2O$ with a catalyst composition which comprises a zirconia substrate which includes one or more oxides of at least one of the following: Ca, Sr, Y, La, Ce, Pr, Nd, Sm, Eu, Gd, Tb, Dy, W, Ti, Al, Si, Ge, and Sn, such as La, Ce, Nd, Sm, Eu, Ti, Al and Si, for example oxides of La, Ce, Nd or W, as a dopant or dopants. The catalyst composition may also comprise nickel oxide, cobalt oxide or a combination thereof as a catalytically active metal or metals deposited upon the surface of the substrate. The dopant or dopants may be included in a solid solution in the zirconium oxide substrate.

Yet another embodiment is directed to a process for converting $N_2O$ to nitrogen and oxygen comprising contacting the $N_2O$ with a catalyst composition which comprises nickel oxide, cobalt oxide or a combination thereof as a catalytically active metal or metals, on a zirconia substrate, the catalyst composition having surface area of about 1 to about 200 $m^2$/g, such as about 5 to about 100 $m^2$/g, after exposure, for about 2 to about 12 hours, such as about 4 to about 12 hours, to a calcination temperature of between about 400° C and about 900° C.

An alternative embodiment is directed to a catalyst composition having surface area of about 1 to about 200 $m^2$/g after exposure, for between about 2 and about 12 hours, such as about 4 and about 12 hours, to a calcination temperatures of between about 400 and about 900°C. The catalyst composition is prepared by a method comprising providing a solution of zirconium chloride, adding to the solution of zirconium chloride a source of at least one of the following: Ca, Sr, Y, La, Ce, Pr, Nd, Sm, Eu, Gd, Tb, Dy, W, Ti, Al, Si, Ge, and Sn, such as La, Ce, Nd, Sm, Eu, Ti, Al and Si, for example La, Ce, Nd or W. Subsequently, to the resulting product is added a solution of ammonium hydroxide or sodium hydroxide under conditions sufficient to produce a solution of zirconium hydroxide. The solution of zirconium hydroxide is maintained at an elevated temperature for a time sufficient to produce a precipitated zirconium hydroxide from which Cl⁻ ions are substantially removed. The zirconium hydroxide is then dried and the dried zirconium hydroxide is calcined to produce a zirconium oxide support. Subsequently the support is loaded with the catalytically active ingredients of NiO, CoO or a combination thereof. The first step in the loading process is the preparation of an aqueous solution of zirconium oxide. This is followed by the addition of an aqueous solution of a source of nickel, an aqueous solution of a source of cobalt or a combination thereof to the aqueous solution of zirconium oxide. Liquid is removed from the resulting product to produce a wet catalyst composition, which is then dried and calcined to produce the catalyst composition, which can be used for converting $N_2O$ to nitrogen and oxygen.

In yet another embodiment, a catalyst composition is prepared, having surface area of about 1 to about 200 $m^2/g$ after exposure for about 2 to about 12 hours such as about 4 to about 12 hours, to a calcination temperature of between about 400 and about 900 °C. The catalyst composition is prepared by a method comprising providing a solution of zirconium chloride, adding to a solution of ammonium hydroxide or sodium hydroxide the solution of zirconium chloride under conditions sufficient to produce a solution of zirconium hydroxide. The zirconium hydroxide solution is maintained at an elevated temperature or at room temperature for a time sufficient to produce a precipitated zirconium hydroxide. Then, Cl⁻ ions are substantially removed from the precipitated zirconium hydroxide, which is dried and then calcined to produce zirconium oxide as a support for the catalyst composition. Subsequently the support is loaded with the catalytically active ingredients of NiO, CoO or a combination thereof. The first step in the loading process is the preparation of an aqueous solution of zirconium oxide. To that solution is added an aqueous solution of a source of nickel, an aqueous solution of a source of cobalt or combination thereof. Then, liquid is removed from the resulting solution to produce a wet catalyst composition, which is dried and calcined to produce the catalyst composition, useful in converting N2O to nitrogen and oxygen.

Another aspect of our invention is directed to a method for making a catalyst composition, which comprises providing a solution of zirconium chloride and then adding to it a source of at least one of: Ca, Sr, Y, La, Ce, Pr, Nd, Sm, Eu, Gd, Tb, Dy, W, Ti, Al, Si, Ge, and Sn, such as La, Ce, Nd, Sm, Eu, Ti, Al and Si, for example La, Ce, Nd or W. To the resulting solution is added a solution of ammonium hydroxide or sodium hydroxide under conditions sufficient to produce a solution of zirconium hydroxide, which is maintained at an elevated temperature for a time sufficient to produce a precipitated zirconium hydroxide. Subsequently, Cl⁻ ions are substantially removed from the precipitated zirconium hydroxide, and the zirconium hydroxide is dried and then calcined to produce a zirconium oxide support. Then, the support is loaded with the catalytically active ingredients of NiO, CoO or a combination thereof. The first step in the loading process is the preparation of an aqueous solution of zirconium oxide. To that solution is added an aqueous solution of a source of nickel, an aqueous solution of a source of cobalt or a combination thereof. Then, liquid is removed from the resulting solution to produce a wet catalyst composition, which is dried and calcined to produce the catalyst composition, which can be used for converting nitrous oxide to nitrogen and oxygen.

An alternative method for making a catalyst composition comprises providing a solution of zirconium chloride, adding to a solution of ammonium hydroxide or sodium hydroxide the solution of zirconium chloride under conditions sufficient to produce a solution of zirconium hydroxide. The solution of zirconium hydroxide is maintained at an elevated temperature or at room (i.e., ambient) temperature for a time sufficient to produce a precipitated zirconium hydroxide. Subsequently, Cl⁻ ions are substantially removed from the precipitated zirconium hydroxide, and the precipitated zirconium hydroxide is dried and calcined to produce a zirconium oxide support. Subsequently, the support is loaded with the catalytically active ingredients of NiO, CoO or a combination thereof. The first step in the loading process is the preparation of an aqueous solution of zirconium oxide. To that solution is added an aqueous solution of a source of nickel, an aqueous solution of a source of cobalt or a combination thereof. Then, liquid is removed from the resulting solution to produce a wet catalyst composition; which is dried and calcined to produce the catalyst composition which can be used for converting nitrous oxide to nitrogen and oxygen.

A yet another embodiment is directed to a process for converting $N_2O$ to nitrogen and oxygen comprising contacting the $N_2O$ with a catalyst composition which comprises nickel oxide, cobalt oxide or a combination thereof on a zirconia substrate. The catalyst composition has surface area of about 1 to about 100 $m^2/g$, such as about 2 to about 30 $m^2/g$, after exposure to a calcination temperature of between about 400 and about 950 °C.

## BRIEF DESCRIPTION OF THE FIGURES

Figure 1 is a graph representing a comparison of predicted surface area of the catalyst of the invention to the catalyst of US patent 5,314,673 at 500° C.
Figure 2 is a graph representing a comparison of predicted surface area of the catalyst of the invention to the catalyst of US patent 5,314,673 at 900° C.

## DETAILED DESCRIPTION

The term "substrate", is also referred to herein as "support".
In all embodiments, the catalyst composition as synthesized (i.e., after it is prepared but prior to calcination or calcinations) has surface area of about 10 to about 500 $m^2/g$, such as about 100 to about 300 $m^2/g$. The catalyst composition of all embodiments has a catalyst deactivation rate constant for decomposition of $N_2O$ as defined below in Example 7, at 800°C of less than $8 \times 10^{-4}$ $hr^{-1}$, such as less than $4 \times 10^{-4}$ $hr^{-1}$, and a deactivation rate constant based on surface area, as defined below in Example 8, of less than 0.03 $day^{-1}$ at 900°C, such as less than 0.01 $day^{-1}$ at 900°C. These two properties (i.e., the catalyst deactivation rate constant for decomposition of $N_2O$ at a given temperature and the deactivation rate constant based on surface area) are indicators of the catalyst stability and activity and they can be determined either before the catalyst which has been calcined is put into service (i.e., fresh catalyst) or after it has been in service. These properties can be determined as discussed in Examples 7 and 8. In some embodiments, as discussed herein, the catalyst composition has surface area of about 1 to about 200 $m^2/g$, such as about 5 to about 100 $m^2g$, after the catalyst composition has been exposed for about 2 to about 12 hours, such as about 4 to about 12 hours, to a calcination temperature of between about 400 and about 900 °C. In all embodiments, the catalyst composition has improved stability and higher surface area, after exposure to service conditions (e.g., in the $N_2O$ conversion process) than heretofore known comparable catalyst compositions.

$N_2O$ which is converted in the process of the invention can originate from various sources, for example in the synthesis of adipic acid or nitric acid. In the embodiment wherein the $N_2O$ originates in the synthesis of nitric acid, the catalyst composition has surface area of about 1 to about 100 $m^2/g$, such as about 2 to about 30 $m^2/g$, after to exposure, for about 2 to about 12 hours, such as about 4 to about 12 hours, to a calcination temperature of between about 400 and about 950 °C. In this embodiment, the $N_2O$ decomposition is conducted at the reaction temperature of about 850 to about 950 °C and the pressure of about 1 to about 25 atmospheres, such as about 1 to about 5 atmospheres. All other procedures and conditions of the $N_2O$ decomposition process will be substantially the same as discussed herein for other embodiments.

In some embodiments, nickel oxide, cobalt oxide or a combination thereof are catalytically active ingredients of the catalyst composition, which are deposited upon the surface of the zirconia substrate. In all embodiments in which a dopant or dopants are used, the dopant or dopants are incorporated into the substrate using techniques discussed in paragraphs [0006] to [0009], [0012], [0013], and/or discussed elsewhere herein. In all embodiments in which a dopant or dopants are used, the dopant or dopants are included in a solid solution in the zirconia substrate.

In the embodiments which include the dopants, the catalyst composition includes one or more oxides of at least one of the following: Ca, Sr, Y, La, Ce, Pr, Nd, Sm, Eu, Gd, Tb, Dy, W, Ti, Al, Si, Ge, and Sn, such as La, Ce, Nd, Sm, Eu, Ti, Al and Si for example oxides of La, Ce, Nd or W, as a dopant or dopants, which are exemplified, without limitation, by $CeO_2$, $Y_2O_3$, $La_2O_3$. $WO_3$, $CaO$, $Al_2O_3$, $PrO_2$, $TiO_2$.

The catalyst composition includes between about 1 and about 10% wt., such as between about 2 and about 5% wt., of the dopant or dopants. The dopants are incorporated into the catalyst composition by any methods, such as those discussed and claimed herein, or by any known methods, such as those disclosed in the relevant publications incorporated herein by reference, discussed in the background section.

Some details of preparation of the catalyst composition, which includes dopants, will now be described with reference to the general discussion of the preparation set forth above in the Summary section.

In the preparation of such catalyst composition, the sources of the dopant elements are usually nitrates of the respective elements, but other salts may be used, such as chlorides, sulfates, carbonates or alkoxides. The solutions of zirconium chloride, ammonium hydroxide and sodium hydroxide are aqueous solutions. Similarly, the solution of zirconium hydroxide produced during synthesis of the catalyst composition is an aqueous solution, which leads to the formation of a gel. The aqueous ammonium hydroxide or sodium hydroxide solution is added to the aqueous solution of zirconium chloride and the source or sources of dopant element(s) in a drop-wise manner. The pH of the resulting solution (including zirconium chloride, the source of dopant element(s) and the aqueous ammonium hydroxide or sodium hydroxide) should be monitored closely. The reaction which produces zirconium hydroxide gel is complete when the pH is about 9.4.

The temperature of the zirconium hydroxide solution is then elevated to a sufficient level, and the solution is maintained for a sufficient time period at the elevated level, to produce precipitated zirconium hydroxide. Suitable temperature ranges from about 75 to about 100°C, such as about 90 to about 100°C, or 100°C, and the time period is about 36 to about 60 hours, such as about 40 to about 56 hours, or 48 hours. The precipitate is filtered and washed with a solution of ammonium nitrate, although other similar salts may be used to remove $Cl^-$ ions until the washing solution is free or substantially free of $Cl^-$ ions. The solution of ammonium nitrate is an aqueous solution. The presence or absence of $Cl^-$ ions in the wash solution can be determined by any known technique, e.g., by adding $AgNO_3$ to the wash solution. The presence of $Cl^-$ ions is indicated by the presence of white precipitation, while the absence of $Cl^-$ ions results in a clear wash solution, when $AgNO_3$ is added.

The zirconium hydroxide is then dried at room temperature for a suitable time period, such as 18 to 30 hours, or 24 hours, and then at 110°C (e.g., in an oven), for another 18 to 30 hours, or 24 hours. The dried zirconium hydroxide is calcined at 650°C for 4 hours to produce a zirconium oxide catalyst support.

The next step will depend on whether it is desired for the catalyst composition to include nickel oxide, cobalt oxide or a combination thereof as catalytically active ingredients.

If it is desired for the catalyst composition to include nickel oxide, cobalt oxide or a combination thereof as catalytically active ingredients, an aqueous solution (preferably in de-ionized water) of zirconium oxide is prepared. Separately, aqueous solutions containing the amounts of nickel nitrate, cobalt nitrate or a combination thereof needed to yield a concentration of 1.5 wt% of NiO, 1.5 wt% of CoO (or a combination thereof) based on the finished catalyst, are prepared. The nickel nitrate, cobalt nitrate (or a combination of the nickel and cobalt nitrate) solutions are added to the aqueous solution of zirconium oxide. The resulting solution (including nickel nitrate, cobalt nitrate or a combination thereof and zirconium oxide) is allowed to sit for about 2 to 4, such as 3 hours at ambient temperature, with occasional stirring. The liquid from the solution is then drained and the catalyst composition is dried (preferably in a vacuum oven) at 105°C for 12 hours to remove adsorbed water. Salts of nickel and cobalt other than nitrates may be used, such as chlorides. The amounts of the salt solutions of cobalt and nickel may be such as to yield a concentration of about 0.5 to about 10 wt% of NiO, about 0.5 to about 10 wt% of CoO or about 0.5 to about 10 wt% of the combination of NiO and CoO based on the finished catalyst.

The catalyst is then calcined in a furnace under an air flow at 650°C for 4 hours to convert the salts of nickel, cobalt or a combination thereof (such as nitrate salts) to their respective oxides. The furnace is heated at a rate of 1°C per minute, and then cooled (when calcination is completed) at 5°C/min until the temperature reaches 200°C. Then, the furnace is allowed to cool down rapidly to ambient temperature. The thus-obtained catalyst composition is removed and used in a $N_2O$ destruction process or stored for future use.

If the catalyst composition does not include nickel oxide, cobalt oxide or a combination thereof the zirconium oxide catalyst support, obtained by calcining the dried zirconium hydroxide at 650°C, can be used as a catalyst in a $N_2O$ destruction process, or stored for future use.

In another embodiment, the catalyst composition does not have dopants. The catalyst synthesis of this embodiment is also conducted with solutions of zirconium chloride, ammonium hydroxide or sodium hydroxide which are aqueous solutions. Similarly, the solution of zirconium hydroxide produced during synthesis of the catalyst composition is an aqueous solution, which leads to the formation of a zirconium hydroxide gel. The aqueous ammonium hydroxide solution or sodium hydroxide solution is added to the aqueous solution of zirconium chloride in a drop-wise manner. The pH of the resulting solution (including zirconium chloride, the ammonium hydroxide or sodium hydroxide solution) should be monitored closely. The reaction which produces zirconium hydroxide is complete when the pH is about 9.4.

The zirconium hydroxide solution is then aged at room temperature (i.e., about 20 to about 30°C) for a sufficient time period (such as 4 to 48 hours) to produce precipitated zirconium hydroxide. Alternatively, the zirconium hydroxide solution may be heated to a temperature and for the time period necessary and held under reflux conditions to cause precipitation of zirconium hydroxide. Thus, the solution may be heated to about 30 to about 125°C, such as about 100 °C, for about 24 to about 100 hours, such as about 40 hours. In either case, the precipitate is filtered and washed with a solution of ammonium nitrate, although other similar salts may be used to remove Cl⁻ ions until the washing solution is free or substantially free of Cl⁻ ions. The zirconium hydroxide is then dried at room temperature for a suitable time period, such as 18 to 30 hours, such as 24 hours, and then at 110°C (e.g., in an oven), for another 18 to 30 hours, such as 24 hours. The dried zirconium hydroxide is calcined at 650°C for 4 hours to produce a zirconium oxide catalyst support.

Thereafter, an aqueous solution (preferably in de-ionized water) of zirconium oxide is prepared. Separately, aqueous solutions containing the amounts of nickel nitrate, cobalt nitrate or a combination thereof needed to yield a concentration of 1.5 wt% of NiO, 1.5 wt% of CoO or a combination thereof based on the finished catalyst, are prepared. The nickel and/or cobalt nitrate solutions are added to the aqueous solution of zirconium oxide. The resulting solution (including nickel nitrate, cobalt nitrate or a combination thereof and zirconium oxide) is allowed to sit for about 2 to 4, such as 3 hours at ambient temperatures, with occasional stirring. The liquid from the solution is then drained and the catalyst composition is dried (preferably in a vacuum oven) at 105°C for 12 hours to remove adsorbed water. Salts of nickel and cobalt other than nitrates may be used, such as chlorides. The amounts of the salt solutions of cobalt and nickel may be such as to yield a concentration of about 0.5 to about 10 wt% of NiO, about 0.5 to about 10 wt% of CoO or a concentration of about 0.5 to about 10 wt% of the combination of NiO and CoO based on the finished catalyst.

The catalyst is then calcined in a furnace under an air flow at 650°C for 4 hours to convert the salts of nickel, cobalt or a combination thereof (such as nitrate salts) to their respective oxides. The furnace is heated at a rate of 1°C per minute, and then cooled (when calcination is completed) at 5°C/min until the temperature is 200°C. Then, the furnace is allowed to cool down rapidly to ambient temperature. The thus-obtained catalyst composition is removed and used in a $N_2O$ destruction process or stored for future use.

In all embodiments in which the catalytically active portion of the catalyst composition includes nickel oxide, cobalt oxide or a combination thereof, such oxides include one or more oxides of nickel, one or more oxides of cobalt or a mixture of the one or more oxides of nickel and the one or more oxides of cobalt. The content of the nickel and/or cobalt oxides in the catalyst composition is such that the catalyst composition converts at least 98 % of nitrous oxide in the feed stream. Thus, the catalyst composition may comprise between about 0.5 to about 10, such as about 0.5 to about 5, or about 1 to about 2.5 % by weight of one or more cobalt oxide, about 0.5 to about 10, such as about 0.5 to about 5, or about 1 to about 2.5% by weight of one or more nickel oxide, or about 0.5 to about 10, such as about 0.5 to about 5, or about 1 to about 2.5 of a combination of each, one or more cobalt oxide and one or more nickel oxide, based on the finished catalyst.

A process of using the catalyst of the invention to decompose nitrous oxide into nitrogen and oxygen may be used on the nitrous oxide in an effluent of gaseous mixtures from industrial processes, such as from processes of production of adipic acid or nitric acid. The process comprises contacting a gaseous mixture, which includes nitrous oxide, with a catalyst composition described herein. Of course, the process may also be carried out with a pure nitrous oxide.

The process may be performed in a fixed bed reactor, such as a tubular reactor, containing the catalyst. The catalyst may be supported in any suitable manner, e.g., on a screen or quartz wool. The reactor would normally include a means for regulating the interior temperature thereof, such as a heater, to bring the catalyst to reaction temperature prior to the introduction of the $N_2O$-containing gas into the reactor. The catalyst may be in an extruded or pellet form and the reaction temperature may range from about 200 to about 1000 °C, such as about 450 to about 750°C, and the pressure from about 1 to about 25 atmospheres, such as about 1 to about 5 atmospheres.

The flow rate of the gas through the reactor depends on the temperature of the catalyst, the thickness of the catalyst bed, the amount of nitrous oxide in the feed stream, and the degree of conversion of the nitrous oxide to nitrogen and oxygen desired.

The catalysts described herein, when used in the process described, reduce the concentration of nitrous oxide present in the effluent gases from the production of adipic acid by about 98 % or to nitrous oxide levels lower than 1000 ppm by volume (0.1 vol %). The catalysts have relatively high thermal stability and catalyst activity remains relatively constant for prolonged periods of time. The high thermal stability is likely to increase the catalyst's lifetime. The high surface area of the catalyst also has the potential to make it more active, which lowers the reaction temperature necessary to destroy nitrous oxide and leads to an improved catalyst lifetime.

Our development will now be illustrated with reference to examples set forth below. The examples do not limit the scope of our invention, and are presented merely for illustrative purposes of some specific embodiments.

## EXAMPLES

Examples 1-3 are directed to the preparation of zirconium oxide used as a support for the catalyst of our invention. In Examples 1-3, the detailed preparation procedure is described with ammonium hydroxide. The preparation with sodium hydroxide can be conducted in a similar manner, as will be apparent to persons skilled in this area of science.

## EXAMPLE 1 (ZIRCONIUM OXIDE PREPARATION WITHOUT DOPANTS)

Zirconium hydroxide is prepared by hydrolysis of zirconium chloride with either ammonium hydroxide or sodium hydroxide.

Prepare an aqueous solution of 10 wt% (0.43 molar or M) zirconium chloride and 5 M aqueous ammonium hydroxide solution. To the aqueous solution of ammonium hydroxide add the zirconium chloride solution in a drop-by-drop fashion. The pH of the solution should be monitored continuously during the addition. The pH will drop from an initial value of 11.8 to approximately 9.4. The reaction leading to the formation of zirconium hydroxide is complete when the pH reaches a value of approximately 9.4. The solution is aged at room temperature for 48 hours. The precipitate thus formed is filtered and washed with a solution of ammonium nitrate to remove Cl- ions from the solution until the washing solution contains no Cl- ions. The presence/absence of Cl- is determined using $AgNO_3$. The absence of Cl- ions in the wash solution results in a clear solution on addition of $AgNO_3$. The presence of Cl- ions is indicated by the presence of white precipitation. Zirconium hydroxide thus formed is dried at room temperature for 24 hours and then in an oven at 110°C for another 24 hours. Finally, dried zirconium hydroxide is calcined at 650°C for 4 hours to yield zirconium oxide.

## EXAMPLE 2 (ZIRCONIUM OXIDE PREPARATION WITHOUT DOPANTS)

Zirconium hydroxide is prepared by hydrolysis of zirconium chloride with either ammonium hydroxide or sodium hydroxide.

Prepare an aqueous solution of 10 wt% (0.43M) zirconium chloride and 5 M aqueous ammonium hydroxide solution. To the aqueous solution of ammonium hydroxide add the zirconium chloride solution in a drop-by-drop fashion. The pH of the solution should be monitored continuously during the addition. The pH will drop from an initial value of 11.8 to approximately 9.4. The reaction leading to the formation of zirconium hydroxide is complete when the pH reaches the value of approximately 9.4. Heat the solution to 100°C under reflux and maintain these conditions for 40 hours. The precipitate thus formed is filtered and washed with a solution of ammonium nitrate to remove Cl- from the solution until the washing solution contains no Cl⁻ ions. The presence/absence of Cl⁻ ions is determined using $AgNO_3$. The absence of Cl⁻ ions in the wash solution results in a clear solution on addition of $AgNO_3$. The presence of Cl⁻ ions is indicated by the presence of white precipitation. Zirconium hydroxide thus formed is dried at room temperature for 24 hours and then in an oven at 110°C for 4 hours to yield zirconium oxide.

## EXAMPLE 3 (ZIRCONIUM OXIDE PREPARATION WITH DOPANTS)

Zirconium hydroxide is prepared by hydrolysis of zirconium chloride with either ammonium hydroxide or sodium hydroxide. Prepare an aqueous solution of 10 wt% (0.43M) zirconium chloride and 5 M aqueous ammonium hydroxide solution. To the aqueous solution containing zirconium chloride add lanthanum nitrate (or any other nitrate salt of the desired dopant). To this solution add the aqueous ammonium hydroxide solution in a drop-wise fashion. The pH of the solution should be monitored continuously during the addition. The pH will increase from an initial value of 1 to approximately 9.4. The reaction leading to the formation of zirconium hydroxide is complete when the pH reaches the value of approximately 9.4. Heat the solution to 100°C under reflux and maintain these conditions for 48 hours. The precipitate thus formed is filtered and washed with a solution of ammonium nitrate to remove Cl⁻ from the solution until the washing solution contains no Cl⁻ ions. The presence/absence of Cl⁻ is determined using $AgNO_3$. The absence of Cl⁻ ions in the wash solution results in a clear solution on addition of $AgNO_3$. The presence of Cl⁻ ions is indicated by the presence of white precipitation. Zirconium hydroxide thus formed is dried at room temperature for 24 hours and then in an oven at 110°C for another 24 hours. Finally, dried zirconium hydroxide is calcined at 650°C for 4 hours to yield zirconium oxide.

## EXAMPLE 4 (COMPARATIVE)

Zirconium hydroxide purchased commercially is added to an aqueous solution of either ammonium hydroxide or sodium hydroxide. Heat the solution to 100°C under reflux and maintain these conditions for 48 hours. The precipitate is filtered and dried at room temperature for 24 hours and then in an oven at 110°C for another 24 hours. Finally, dried zirconium hydroxide is calcined at 650°C for 4 hours to yield zirconium oxide.
Zirconia of all examples and any embodiment discussed herein may be formed into any desired shape, such as pellets or extrudates by known methods.

## EXAMPLE 5 (LOADING THE SUPPORT WITH NiO AND CoO)

Prepare aqueous solutions containing required amounts of nickel nitrate and cobalt nitrate to yield a final concentration of 1.5 wt% nickel oxide and 1.5 wt% of cobalt oxide based on the finished catalyst. A known amount of zirconium oxide powder synthesized either in any of Examples 1-3 or purchased from commercial sources or produced according to the Comparative Example 4, is dissolved in de-ionized water. To this solution add the prepared nickel nitrate and cobalt nitrate solutions. Let the solution sit for 3 hours with occasional stirring. Drain the solution and dry the catalyst in a vacuum oven for 12 hours at 105°C to remove adsorbed water. Finally, calcine the catalyst in a furnace under a flow of air at 650°C for 4 hours to convert nitrate salts to their respective oxide forms. Heat the furnace at a rate of 1 °C/min. Cool the furnace at a rate of 5°C/min to 200°C after which let the furnace cool down to ambient temperature rapidly. Remove the catalyst from the oven and store for activity and surface area analysis.

## EXAMPLE 6 (MEASURING ACTIVITY OF THE CATALYST)

The activity of the catalyst can be measured according to the procedure described in this example. The procedure may be used to measure the activity of a "fresh" catalyst that has not been in service, as well as a catalyst that has been in service.
The activity of the catalyst towards conversion of $N_2O$ to $N_2$ and $O_2$ is measured in a continuous fixed bed reactor. The reactor is loaded with a known amount of catalyst, typically, 1.5 g of catalyst. Catalyst particles between 0.7 mm and 1.0 mm can be used in these measurements. The temperature of the gas is measured at the inlet and outlet of the catalyst bed. The reactor is heated so that the outlet temperature is typically varied between 250 and 800°C in steps of 50°C. The reactor is heated to the desired temperature using a tube furnace. More specifically the conversion of $N_2O$ is obtained at temperatures of 450, 550, 600, 650 and 800°C, after holding the reactor at the respective temperatures for 30 minutes. Activity of the catalyst in the presence of two different feed gases is measured; (a) 10 vol% $N_2O$ in nitrogen, (b) 10 vol% $N_2O$ 5.5 vol% $CO_2$ 12 vol% $O_2$, 0.05 vol% NO, 2.9 vol% $H_2O$ in nitrogen. The space velocity can be varied between 5000 $hr^{-1}$ to 125,000 $hr^{-1}$. Space velocity of 80,000 $hr^{-1}$ is typically maintained unless otherwise specified. The composition of the exit gas is measured using an on-line FTIR analyzer. The best catalyst is the one exhibiting highest conversion at a given temperature.

## EXAMPLE 7 (MEASUREMENT OF THE CATALYST DEACTIVATION RATE

## CONSTANT FOR THE DECOMPOSITION OF $N_2O$)

Rate constant for the decomposition of $N_2O$ and the catalyst deactivation rate constant for this process (i.e., for the decomposition of $N_2O$) is evaluated using the packed bed reactor described in Example 8. The reaction is carried out at 700, 750 and 800 °C for 7 days at each temperature. The catalyst with the lowest catalyst deactivation rate constant for the decomposition of $N_2O$ is considered the best catalyst and comparison of the catalyst deactivation rate constant for the decomposition of $N_2O$ for a reference catalyst (e.g., a prior art undoped catalyst) with a catalyst made according to our invention is expected to indicate the benefits of the catalyst of the invention.

For each catalyst, the rate constant for the decomposition of $N_2O$ and the catalyst deactivation rate constant for the decomposition of $N_2O$ are determined using the following procedure and equations.

Catalyst deactivation is known to be the loss in activity of the catalyst over time. Catalyst activity [a(t)] at any time, t, is defined as follows:

$$a(t) \quad = \quad \frac{-r_{N2O}(t)}{-r_{N2O}(t=0)} \quad (1)$$

where $-r_{N2O}(t)$ is the rate of reaction (or "reaction rate") for the decomposition of $N_2O$ at time t and $-r_{N2O}(t = 0)$ is the rate of reaction for the decomposition of $N_2O$ with a fresh catalyst. Accordingly, $a(t) \leq 1$. For a deactivated catalyst, the reaction rate can be calculated from equation (2):

$$-r_{N2O} = a(t)\, k_{N2O}(T) C_{N2O}^n \quad (2)$$

For a fresh catalyst, the reaction rate constant can be calculated from equation (3):

$$-r_{N2O}(t=0) = k_{N2O}(T) C_{N2O}^n \quad (3)$$

where $k_{N2O}(T)$ is the $N_2O$ reaction rate constant, which is a function of absolute temperature T, $C_{N2O}$ is the concentration of $N_2O$, and n is reaction order. The dependence of $k_{N2O}(T)$ on temperature can be described using Arrhenius equation as given below

$$k_{N2O}(T) = A_{N2O} \exp\left(\frac{-E_{a,N2O}}{RT}\right) \quad (4)$$

where $A_{N2O}$ is the pre-exponential factor, $E_{a,N2O}$ is the activation energy for decomposition of $N_2O$, R is the universal gas constant, and T is the absolute temperature of the reaction.

One of the main routes to catalyst deactivation is by sintering of the catalyst. Sintering also known as aging is reduction of catalyst activity upon exposure of the catalyst to high temperatures. Sintering is attributed to crystal agglomeration, surface recrystallization or formation and elimination of surface defects. The rate of deactivation through sintering, $r_d$, is defined mathematically as follows:

$$r_d = k_d(T)a^2 = -\frac{da}{dt} \quad (5)$$

Integrating equation 5 leads to

$$a(t) = \frac{1}{1 + k_d(T)t} \quad (6)$$

$k_d(T)$, the catalyst deactivation rate constant for the decomposition of $N_2O$, can be obtained by rearranging equation 6:

$$k_d(T) = \frac{1}{t}\left[\frac{1 - a(t)}{a(t)}\right] \quad (7)$$

The temperature dependence for $k_d(T)$ follows Arrhenius equation and is as follows:

$$k_d(T) = A_d \exp\left(\frac{-E_{a,d}}{RT}\right) \quad (8)$$

where $A_d$ is the pre-exponential factor and $E_{a,d}$ is the activation energy for catalyst deactivation.
See, Elements of Chemical Reaction Engineering, H. Scott Fogler, 2nd Edition, P T R Prentice Hall, Englewood Cliffs, NJ 07632.

## EXAMPLE 8 (MEASUREMENT OF SURFACE AREA OF FRESH AND AGED CATALYST - DETERMINATION OF SURFACE AREA LOSS DUE TO AGING)

A standard catalyst (i.e., a reference catalyst) and the catalysts made according to the procedures described herein are exposed to high temperatures in an inert atmosphere for a long duration. The samples are placed in a furnace at a set temperature (600 < T < 1000° C). The samples are removed at regular time intervals and the surface area of the catalyst, both fresh and exposed samples, is measured using a Quantachrom AutoSorb BET apparatus.
As sintering of the catalyst leads to reduction in surface area, change in surface area with time can be related to a deactivation rate constant based on surface area, $k_{1d}$, as follows:

$$SA = \frac{SA_0}{1 + k_{1d}(T)t} \quad (9)$$

where SA is surface area of the catalyst at any given time t and $SA_0$ is the surface area of the fresh catalyst. Therefore, measuring the change in surface area as a function of time at a given temperature one can obtain $k_{1d}$ for various catalysts from equation 10:

$$k_{1d}(T) = \frac{1}{t}\left[\frac{SA_0 - SA}{SA}\right] \quad (10)$$

Catalysts with small values of $k_{1d}$ are desired. Dependence of $k_{1d}$ on temperature can be described according to equation 11:

$$k_{1_d}(T) = A_{1d} \exp\left(\frac{-E_{a,1d}}{RT}\right) \quad (11)$$

where $A_{1d}$ is the pre-exponential factor and $E_{a,1d}$ is the activation energy for catalyst deactivation based on surface area. See, Elements of Chemical Reaction Engineering, H. Scott Fogler, 2nd Edition, P T R Prentice Hall, Englewood Cliffs, NJ 07632.

Furthermore, equation 10 can also be used to estimate $k_{1d}$ for various catalysts subjected to calcination at various temperatures. For example, change in surface area of standard catalyst (1.25 wt% NiO and 1.25 wt% CoO on $ZrO_2$ support) which can be made substantially as described in Anseth et al., U.S. Patent No. 5,314,673 when exposed to 900°C calcination conditions for 2 hours is as follows:

| Sample ID | Surface area, $m^2/g$ | | $k_{1d}$ according to eqn 10, $hr^{-1}$ |
|---|---|---|---|
| | Before | After exposure to 900°C calcination | |
| Undoped - 1 | 26.27 | 3.57 | 0.43 |
| Undoped - 2 | 20.48 | 3.78 | 0.4 |

From Mercera et al. (Applied Catalysis, 71, 1991, 363-391) $k_{1d}$ values for $La_2O_3$ doped zirconia when subjected to calcination temperature for 15 hours can be estimated and are as follows (according to the publication - not measured in our laboratory):

| Calcination temperature, °C | Surface area, $m^2/g$ | $k_{1d}$ according to eqn 10, $hr^{-1}$ |
|---|---|---|
| 400 | 69.4 | 0 |
| 500 | 68.6 | 0.00077 |
| 600 | 64.2 | 0.0055 |
| 700 | 57.7 | 0.011 |
| 800 | 46.4 | 0.022 |
| 900 | 32.6 | 0.035 |

As can be seen above, stabilization of the zirconia substrate lowers the $k_{1d}$ values obtained using surface area changes during calcination.

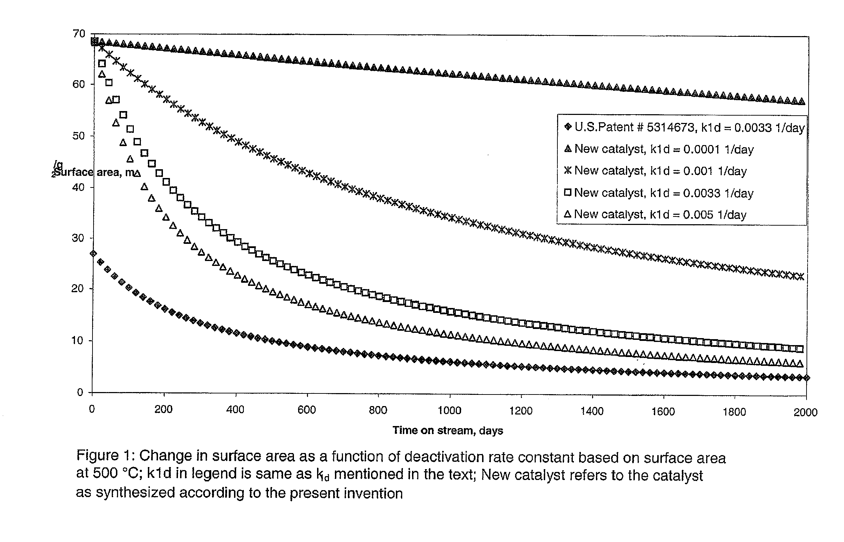

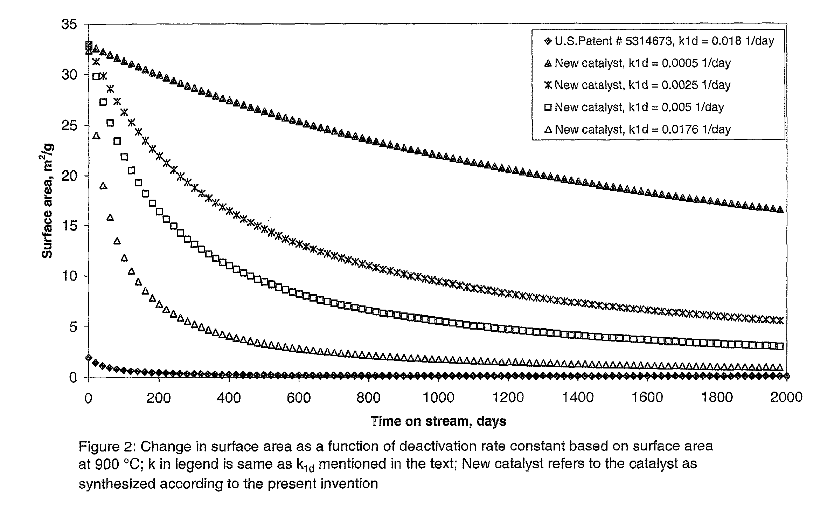

Deactivation rate constant based on surface area ($k_{1d}$) was calculated for a 1.25 wt% NiO and 1.25 wt% CoO on $ZrO_2$ support which can be made substantially as described in Anseth et al., U.S. Patent No. 5,314,673. $k_{1d}$ was estimated at 500 °C by measuring the surface area of the catalyst at two different times, initial and after 8 months according to equation 10. The estimated $k_{1d}$ was $3.3 \times 10^{-3}$ $day^{-1}$. Using this rate constant and equation 10 one could predict surface area of the catalyst made according to Anseth et al., U.S. Patent No. 5,314,673 at any given time and this is shown in Figure 1. One advantage of the present invention is to improve the initial catalyst surface area as well as to maintain this high surface area upon exposure to process temperatures. Equation 10 can be used to predict and develop surface area vs. time profiles for a variety of $k_{1d}$ values and initial surface area. This is shown in Figure 1 for a modified catalyst (i.e., "new catalyst" referred to in Figures 1 and 2) with an initial surface area of 68 $m^2/g$ at 500°C for a range of $k_{1d}$ values. As shown by the graphs, one could expect the catalyst made according to our invention to have a much longer life even if the $k_{1d}$ values are greater than the unmodified catalyst of US Patent No. 5,314,673. Similarly one could predict the change in surface area of unmodified and modified catalyst at 900 °C for a range of $k_{1d}$ values as shown in Figure 2. As the predictions indicate, one could improve the catalyst life significantly by improving the initial surface area. Also, a decrease in deactivation rate constant based on surface area or an improvement in catalyst stability by either changing the precipitation technique or by the addition of dopants provides a catalyst with significantly increased catalyst life.

While the illustrative compositions, processes, methods and procedures, have been described with particularity, it will be understood that various other modifications will be apparent to and can be readily made by those skilled in the art without departing from the spirit and scope of our disclosure. Accordingly, we do not intend for the scope of the claims of this application to be limited to the examples and descriptions set forth in the application, but rather that the claims be construed as encompassing all novel and unobvious features of the embodiments covered by the claims, including equivalents of such embodiments.

Specific Embodiments

Specific embodiments of the invention described herein are set out below as embodiments 1 to 39.

1. A catalyst composition comprising a zirconium oxide substrate which includes one or more oxides of at least one of the following: Ca, Sr, Y, La, Ce, Pr, Nd, Sm, Eu, Gd, Tb, Dy, W, Ti, Al, Si, Ge, or Sn, as a dopant or dopants, the catalyst composition further comprising nickel oxide, cobalt oxide or a combination thereof.

2. A catalyst composition of embodiment 1, wherein the one or more oxides are oxides of La, Ce, Nd or W.

3. A catalyst composition of embodiment 1, which has surface area of about 1 to about 200 $m^2$/g after exposure to a calcination temperature between about 400° C and about 900° C.

4. A catalyst composition of embodiment 1, which has surface area of about 5 to about 100 $m^2$/g after exposure to a calcination temperature between about 400° C and about 900 °C.

5. A catalyst composition of embodiment 1, wherein the zirconium oxide substrate includes from about 1 to about 10% by weight of one or more oxides of at least one of the following: Ca, Sr, Y, La, Ce, Pr, Nd, Sm, Eu, Gd, Tb, Dy, W, Ti, Al, Si, Ge, or Sn, as a dopant or dopants.

6. A catalyst composition of embodiment 1, which has the catalyst deactivation rate constant for decomposition of $N_2O$ at 800 °C of less than $8 \times 10^{-4}$ $hr^{-1}$, and a deactivation rate constant based on surface area of less than 0.03 $day^{-1}$ at 900 °C.

7. A catalyst composition of embodiment 1, which has the catalyst deactivation rate constant for decomposition of $N_2O$ at 800 °C of less than $4 \times 10^{-4}$ $hr^{-1}$, and a deactivation rate constant based on surface area of less than 0.01 $day^{-1}$ at 900 °C.

8. A process for converting $N_2O$ to nitrogen and oxygen comprising contacting the $N_2O$ with a catalyst composition which comprises a zirconium oxide substrate which includes one or more oxides of at least one of the following: Ca, Sr, Y, La, Ce, Pr, Nd, Sm, Eu, Gd, Tb, Dy, W, Ti, Al, Si, Ge, or Sn, as a dopant or dopants.

9. A process of embodiment 8, wherein the catalyst composition further comprises nickel oxide, cobalt oxide or a combination thereof.

10. A process of embodiment 8, wherein the dopant or dopants are included in a solid solution in the zirconium oxide.

11. A process of embodiment 9, wherein the nickel oxide, cobalt oxide or a combination thereof are catalytically active metals deposited upon surface of the zirconium oxide substrate.

12. A process of embodiment 8, wherein the catalyst composition has surface area of about 1 to about 200 $m^2$/g after exposure to a calcination temperature between about 400 and about 900°C.

13. A process of embodiment 8, wherein the catalyst composition has surface area of about 5 to about 100 $m^2$/g after exposure to a temperature of about 400 °C to about 900 °C.

14. A catalyst composition of embodiment 8, which has the catalyst deactivation rate constant for decomposition of $N_2O$ at 800 °C of less than $8 \times 10^{-4}$ $hr^{-1}$, and a deactivation rate constant based on surface area of less than 0.03 $day^{-1}$ at 900 °C.

15. A catalyst composition of embodiment 8, which has the catalyst deactivation rate constant for decomposition of $N_2O$ at 800 °C of less than $4 \times 10^{-4}$ $hr^{-1}$, and a deactivation rate constant based on surface area of less than 0.01 $day^{-1}$ at 900 °C.

16. A process for converting $N_2O$ to nitrogen and oxygen comprising contacting the $N_2O$ with a catalyst composition which comprises nickel oxide, cobalt oxide or a combination thereof on a zirconia substrate, the catalyst composition having surface area of about 1 to about 200 $m^2/g$ after exposure to a calcination temperature of between about 400 and about 900 °C.

17. A process of embodiment 16, wherein the catalyst composition has surface area of about 5 to about 100 $m^2/g$ after exposure to a temperature of between about 400°C and about 900 °C.

18. A catalyst composition of embodiment 16, which has the catalyst deactivation rate constant for decomposition of $N_2O$ at 800 °C of less than $8 \times 10^{-4}$ $hr^{-1}$, and a deactivation rate constant based on surface area of less than 0.03 $day^{-1}$ at 900 °C.

19. A catalyst composition of embodiment 16, which has the catalyst deactivation rate constant for decomposition of $N_2O$ at 800 °C of less than $4 \times 10^{-4}$ $hr^{-1}$, and a deactivation rate constant based on surface area of less than 0.01 $day^{-1}$ at 900 °C.

20. A catalyst composition having surface area of about 1 to about 200 $m^2/g$ after exposure to a calcination temperature between about 400 and about 900 °C prepared by a method comprising:

 a. providing a solution of zirconium chloride;
 b. adding to the solution of zirconium chloride a source of at least one of the following:

 Ca, Sr, Y, La, Ce, Pr, Nd, Sm, Eu, Gd, Tb, Dy, W, Ti, Al, Si, Ge, or Sn;

 c. adding to the product of (b) a solution of ammonium hydroxide or sodium hydroxide under conditions sufficient to produce a solution of zirconium hydroxide;
 d. maintaining the solution of zirconium hydroxide at an elevated temperature for a time sufficient to produce a precipitated zirconium hydroxide;
 e. substantially removing $Cl^-$ ions from the precipitated zirconium hydroxide;
 f. drying the zirconium hydroxide;
 g. calcining the zirconium hydroxide to produce zirconium oxide;
 h. preparing an aqueous solution of zirconium oxide;
 i. adding to the aqueous solution of zirconium oxide an aqueous solution of a source of nickel, an aqueous solution of a source of cobalt or a combination thereof;
 j. removing liquid from the product of (i) to produce a wet catalyst composition;
 k. drying the wet catalyst composition;
 l. calcining the dried catalyst composition to produce the catalyst composition.

21. A catalyst composition of embodiment 20 which has surface area of about 5 to about 100 $m^2/g$ after exposure to a calcination temperature of between about 400°C and about 900 °C.

22. A catalyst composition of embodiment 20, which has the catalyst deactivation rate constant for decomposition of $N_2O$ at 800 °C of less than $8 \times 10^{-4}$ $hr^{-1}$, and a deactivation rate constant based on surface area of less than 0.03 $day^{-1}$ at 900 °C.

23. A catalyst composition of embodiment 20, which has the catalyst deactivation rate constant for decomposition of $N_2O$ at 800 °C of less than $4 \times 10^{-4}$ $hr^{-1}$, and a deactivation rate constant based on surface area of less than 0.01 $day^{-1}$ at 900 °C.

24. A catalyst composition having surface area of about 1 to about 200 $m^2/g$ after exposure to a calcination temperature of between about 400 °C and about 900 °C, prepared by a method comprising:

 (i) providing a solution of zirconium chloride;
 (ii) adding to a solution of ammonium hydroxide or sodium hydroxide the solution of zirconium chloride under conditions sufficient to produce a solution of zirconium hydroxide;
 (iii) maintaining the solution of zirconium hydroxide at an elevated temperature or at room temperature for a time sufficient to produce a precipitated zirconium hydroxide;
 (iv) substantially removing $Cl^-$ ions from the precipitated zirconium hydroxide;

(v) drying the zirconium hydroxide;
(vi) calcining the zirconium hydroxide to produce zirconium oxide;
(vii) preparing an aqueous solution of zirconium oxide;
(viii) adding to the aqueous solution of zirconium oxide an aqueous solution of a source of nickel, an aqueous solution of a source of cobalt or a combination thereof;
(ix) removing liquid from the product of (viii) to produce a wet catalyst composition;
(x) drying the wet catalyst composition; and
(xi) calcining the dried catalyst composition to produce the catalyst composition.

25. A catalyst composition of embodiment 24 which has surface area of about 5 to about 100 $m^2/g$ after exposure to a calcination temperature between 400°C and about 900 °C.

26. A catalyst composition of embodiment 24, which has the catalyst deactivation rate constant for decomposition of $N_2O$ at 800 °C of less than $8\times10^{-4}$ $hr^{-1}$, and a deactivation rate constant based on surface area of less than 0.03 $day^{-1}$ at 900 °C.

27. A catalyst composition of embodiment 24, which has the catalyst deactivation rate constant for decomposition of $N_2O$ at 800 °C of less than $4.0\times10^{-4}$ $hr^{-1}$, and a deactivation rate constant based on surface area of less than 0.01 $day^{-1}$ at 900 °C.

28. A method for making a catalyst composition comprising:

(i) providing a solution of zirconium chloride;
(ii) adding to the solution of zirconium chloride a source of at least one of the following: Ca, Sr, Y, La, Ce, Pr, Nd, Sm, Eu, Gd, Tb, Dy, W, Ti, Al, Si, Ge, or Sn;
(iii) adding to the product of (ii) a solution of ammonium hydroxide or sodium hydroxide under conditions sufficient to produce a solution of zirconium hydroxide;
(iv) maintaining the solution of zirconium hydroxide at an elevated temperature for a time sufficient to produce a precipitated zirconium hydroxide;
(v) substantially removing $Cl^-$ ions from the precipitated zirconium hydroxide;
(vi) drying the zirconium hydroxide;
(vii) calcining the zirconium hydroxide to produce zirconium oxide;
(viii) preparing an aqueous solution of zirconium oxide;
(ix) adding to the aqueous solution of zirconium oxide an aqueous solution of a source of nickel, an aqueous solution of a source of cobalt or a combination thereof;
(x) removing liquid from the product of (ix) to produce a wet catalyst composition;
(xi) drying the wet catalyst composition;
(xii) calcining the dried catalyst composition to produce the catalyst composition.

29. A method of embodiment 28 wherein the catalyst composition has surface area of about 1 to about 200 $m^2/g$ after exposure to a calcination temperature of between about 400°C and about 900 °C.

30. A method of embodiment 28 wherein the catalyst composition has surface area of about 5 to about 100 $m^2/g$ after exposure to a calcination temperature of between about 400°C and about 900 °C.

31. A catalyst composition of embodiment 28, which has the catalyst deactivation rate constant for decomposition of $N_2O$ at 800 °C of less than $8\times10^{-4}$ $hr^{-1}$, and a deactivation rate constant based on surface area of less than 0.03 $day^{-1}$ at 900 °C.

32. A catalyst composition of embodiment 28, which has the catalyst deactivation rate constant for decomposition of $N_2O$ at 800 °C of less than $4 \times 10^{-4}$ $hr^{-1}$, and a deactivation rate constant based on surface area of less than 0.01$day^{-1}$ at 900 °C.

33. A method for making a catalyst composition comprising:

(i) providing a solution of zirconium chloride;
(ii) adding to a solution of ammonium hydroxide or sodium hydroxide the solution of zirconium chloride under conditions sufficient to produce a solution of zirconium hydroxide;

(iii) maintaining the solution of zirconium hydroxide at an elevated temperature or at room temperature for a time sufficient to produce a precipitated zirconium hydroxide;
(iv) substantially removing Cl$^-$ ions from the precipitated zirconium hydroxide;
(v) drying the zirconium hydroxide;
(vi) calcining the zirconium hydroxide to produce zirconium oxide;
(vii) preparing an aqueous solution of zirconium oxide;
(viii) adding to the aqueous solution of zirconium oxide an aqueous solution of a source of nickel, an aqueous solution of a source of cobalt or a combination thereof;
(ix) removing liquid from the product of (viii) to produce a wet catalyst composition;
(x) drying the wet catalyst composition; and
(xi) calcining the dried catalyst composition to produce the catalyst composition.

34. A method embodiment 33, wherein the catalyst composition has surface area of about 34. A method of embodiment 33, wherein the catalyst composition has surface area of about 1 to about 200 m$^2$/g after exposure to a calcination temperature between about 400 and about 900 °C.

35. A method of embodiment 33, wherein the catalyst composition has surface area of about 5 to about 100 m$^2$/g after exposure to a calcination temperature of between about 400 °C and about 900 °C.

36. A method of embodiment 33, which has the catalyst deactivation rate constant for decomposition of N$_2$O at 800 °C of less than $8 \times 10^{-4}$ hr$^{-1}$, and a deactivation rate constant based on surface area of less than 0.03 day$^{-1}$ at 900 °C.

37. A method of embodiment 33, which has the catalyst deactivation rate constant for decomposition of N$_2$O at 800 °C of less than $4 \times 10^{-4}$ hr$^{-1}$, and a deactivation rate constant based on surface area of less than 0.01 day$^{-1}$ at 900 °C.

38. A process for converting N$_2$O to nitrogen and oxygen comprising contacting the N$_2$O with a catalyst composition which comprises nickel oxide, cobalt oxide or a combination thereof on a zirconia substrate, the catalyst composition having surface area of about 1 to about 100 m$^2$/g after exposure to a calcination temperature of between about 400°C and about 950 °C.

39. A process of embodiment 38, wherein the catalyst composition has surface area of about 2 to about 30 m$^2$/g after exposure to a calcination temperature of between about 400°C and about 950 °C.

**Claims**

1. A method for making a catalyst composition comprising:

   (i) providing a solution of zirconium chloride;
   (ii) adding to a solution of ammonium hydroxide or sodium hydroxide the solution of zirconium chloride under conditions sufficient to produce a solution of zirconium hydroxide;
   (iii) maintaining the solution of zirconium hydroxide at an elevated temperature or at room temperature for a time sufficient to produce a precipitated zirconium hydroxide;
   (iv) substantially removing Cl$^-$ ions from the precipitated zirconium hydroxide;
   (v) drying the zirconium hydroxide;
   (vi) calcining the zirconium hydroxide to produce zirconium oxide;
   (vii) preparing an aqueous solution of zirconium oxide;
   (viii) adding to the aqueous solution of zirconium oxide an aqueous solution of a source of nickel, an aqueous solution of a source of cobalt or a combination thereof;
   (ix) removing liquid from the product of (viii) to produce a wet catalyst composition;
   (x) drying the wet catalyst composition; and
   (xi) calcining the dried catalyst composition to produce the catalyst composition.

2. A method of claim 1, wherein the catalyst composition has surface area of about 1 to about 200 m$^2$/g after exposure to a calcination temperature between about 400°C and about 900 °C.

3. A method of claim 1, wherein the catalyst composition has surface area of about 5 to about 100 m$^2$/g after exposure to a calcination temperature of between about 400 °C and about 900 °C.

4. A method of claim 1, which has the catalyst deactivation rate constant for decomposition of $N_2O$ at 800 °C of less than $8 \times 10^{-4}$ hr$^{-1}$, and a deactivation rate constant based on surface area of less than 0.03 day$^{-1}$ at 900 °C.

5. A method of claim 1, which has the catalyst deactivation rate constant for decomposition of $N_2O$ at 800 °C of less than $4 \times 10^{-4}$ hr$^{-1}$, and a deactivation rate constant based on surface area of less than 0.01 day$^{-1}$ at 900 °C.

6. A catalyst composition having surface area of about 1 to about 200 m$^2$/g after exposure to a calcination temperature of between about 400 °C and about 900 °C, prepared by a method comprising:

> (i) providing a solution of zirconium chloride;
> (ii) adding to a solution of ammonium hydroxide or sodium hydroxide the solution of zirconium chloride under conditions sufficient to produce a solution of zirconium hydroxide;
> (iii) maintaining the solution of zirconium hydroxide at an elevated temperature or at room temperature for a time sufficient to produce a precipitated zirconium hydroxide;
> (iv) substantially removing Cl$^-$ ions from the precipitated zirconium hydroxide;
> (v) drying the zirconium hydroxide;
> (vi) calcining the zirconium hydroxide to produce zirconium oxide;
> (vii) preparing an aqueous solution of zirconium oxide;
> (viii) adding to the aqueous solution of zirconium oxide an aqueous solution of a source of nickel, an aqueous solution of a source of cobalt or a combination thereof;
> (ix) removing liquid from the product of (viii) to produce a wet catalyst composition;
> (x) drying the wet catalyst composition; and
> (xi) calcining the dried catalyst composition to produce the catalyst composition.

7. A catalyst composition of claim 6 which has surface area of about 5 to about 100 m$^2$/g after exposure to a calcination temperature between 400°C and about 900 °C.

8. A catalyst composition of claim 6, which has the catalyst deactivation rate constant for decomposition of $N_2O$ at 800 °C of less than $8 \times 10^{-4}$ hr$^{-1}$, and a deactivation rate constant based on surface area of less than 0.03 day$^{-1}$ at 900 °C.

9. A catalyst composition of claim 6, which has the catalyst deactivation rate constant for decomposition of $N_2O$ at 800 °C of less than $4.0 \times 10^{-4}$ hr$^{-1}$, and a deactivation rate constant based on surface area of less than 0.01 day$^{-1}$ at 900 °C.

Figure 1: Change in surface area as a function of deactivation rate constant based on surface area at 500 °C; k1d in legend is same as $k_d$ mentioned in the text; New catalyst refers to the catalyst as synthesized according to the present invention

Figure 2: Change in surface area as a function of deactivation rate constant based on surface area at 900 °C; k in legend is same as $k_{1d}$ mentioned in the text; New catalyst refers to the catalyst as synthesized according to the present invention

Europäisches
Patentamt

European
Patent Office

Office européen
des brevets

## EUROPEAN SEARCH REPORT

Application Number

EP 10 15 4088

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 672 558 A (WHITE JAMES F [US] ET AL) 30 September 1997 (1997-09-30) * claims; examples 7,8 * | 1-9 | INV. B01J23/00 |
| X | US 6 193 942 B1 (OKUDA NORIMASA [JP] ET AL) 27 February 2001 (2001-02-27) * claims; examples 6,8 * | 1-9 | |
| A | US 6 673 326 B1 (ROSSIN JOSEPH A [US] ET AL) 6 January 2004 (2004-01-06) * the whole document * | 1-9 | |
| A | DE 199 09 176 A1 (KATALEUNA GMBH CATALYSTS [DE]) 7 September 2000 (2000-09-07) * the whole document * | 1-9 | |
| A | US 5 252 316 A (KRIECHBAUM GANGOLF [DE] ET AL) 12 October 1993 (1993-10-12) * examples * | 1-9 | TECHNICAL FIELDS SEARCHED (IPC) B01J |

The present search report has been drawn up for all claims

| Place of search | Date of completion of the search | Examiner |
|---|---|---|
| Munich | 21 April 2010 | de Cauwer, Robby |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 15 4088

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2010

| Patent document cited in search report | | Publication date | Patent family member(s) | | Publication date |
|---|---|---|---|---|---|
| US 5672558 | A | 30-09-1997 | AU | 5560596 A | 07-11-1996 |
| | | | CA | 2213777 A1 | 24-10-1996 |
| | | | EP | 0821620 A1 | 04-02-1998 |
| | | | JP | 11504255 T | 20-04-1999 |
| | | | WO | 9633014 A1 | 24-10-1996 |
| US 6193942 | B1 | 27-02-2001 | NONE | | |
| US 6673326 | B1 | 06-01-2004 | NONE | | |
| DE 19909176 | A1 | 07-09-2000 | AT | 250977 T | 15-10-2003 |
| | | | CN | 1349434 A | 15-05-2002 |
| | | | DK | 1161297 T3 | 09-02-2004 |
| | | | WO | 0051728 A1 | 08-09-2000 |
| | | | EP | 1161297 A1 | 12-12-2001 |
| | | | JP | 2002537974 T | 12-11-2002 |
| | | | US | 6680280 B1 | 20-01-2004 |
| US 5252316 | A | 12-10-1993 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 94141507 P
- US 5314673 A, Anseth
- EP 1504805 A1, Alini
- FR 2590887
- WO 0051715 A, Vernooy

### Non-patent literature cited in the description

- **Stevens R.** Zirconia and Zirconia Ceramics. Magnesium Electron Ltd, 1996
- **Chuah ; Jaenicke.** *Applied Catalysis A: General,* 1997, vol. 163, 261-273
- **Chuah ; Jaenicke.** *Applied Catalysis A: General,* 1996, vol. 145, 267-284
- **Stevens R.** Zirconia and Zirconia Ceramics. Magnesium Elektron Ltd, 1996
- **Mercera et al.** *Applied Catalysis,* 1991, vol. 71, 363-391
- **Mercera et al.** *Applied Catalysts,* 1991, vol. 78, 79-96
- **B. Fegley Jr. ; P. White ; H.K. Bowen.** Am. Ceram. Soc. Bull. 1985, vol. 64, 1115
- **P.D.L. Mercera ; J.G. Van Ommen ; E.B.M. Doesburg ; A.J. Burggraaf ; J.R.H. Ross.** *Appl. Catal.,* 1992, vol. 71, 363
- **P.D.L. Mercera ; J.G. Van Ommen ; E.B.M. Doesburg ; A.J. Burggraaf ; J.R.H. Ross.** *Appl. Catal.,* 1991, vol. 78, 79
- **J.C. Duchet ; M.J. Tilliette ; D. Cornet.** *Catal. Today,* 1991, vol. 10, 507
- **R. Franklin ; P. Goulding ; J. Haviland ; R.W. Joyner ; I. McAlpine ; P. Moles ; C. Norman ; T. Nowell.** *Catal. Today,* 1991, vol. 10 (405), 3B
- **Moles et al.** Development of High Surface Area Zirconia Supports For Environmental Catalysts. *Science and Technology in Catalysis,* 1994, http://www.zrchem.com/pdf/CATGEN3.pdf
- **Guerrero et al.** *Applied Catalysis A: General,* 2006, vol. 298, 243-253
- **Franklin et al.** *Catalysis Today,* 1991, vol. 10, 405
- **Duchet et al.** *Catalysis Today,* 1991, vol. 10, 507-520
- **H. Scott Fogler.** Elements of Chemical Reaction Engineering. P T R Prentice Hall